# EUROPEAN PATENT APPLICATION

(11) **EP 1 897 903 A1**
(43) Date of publication of application: **12.03.2008**
(21) Application number: 06767262.6
(22) Date of filing: 23.06.2006
(51) Int. Cl.: C08J 9/00, C08J 9/26, H01M 2/16

(54) **METHOD FOR PRODUCING POLYOLEFIN MICROPOROUS MEMBRANE**

(30) Priority: 24.06.2005 JP 2005185152
(71) Applicant: Tonen Chemical Corporation, Tokyo 108-8005 (JP)
(72) Inventor: TAKITA, Kotaro, Nasushiobara-shi Tochigi 3292735 (JP); YAMADA, Kazuhiro, Nashushiobara-shi Tochigi 3292732 (JP); KAIMAI, Norimitsu, Yokohama-shi Kanagawa 2300074 (JP); NAKAMURA, Teiji, Tokyo 1670031 (JP); KONO, Koichi, Asaka-shi Saitama 3510025 (JP)
(74) Representative: Strehl Schübel-Hopf & Partner
(86) International application number: PCT/JP2006/312645
(87) International publication number: WO 2006/137535

(57) **Abstract**

A method for producing a microporous polyolefin membrane by extruding a melt blend comprising a polyethylene resin, polypropylene having a mass-average molecular weight of 1 × 10⁵ or more and an ethylene content of 5% by mass or less, and a membrane-forming solvent through a die, slowly cooling the resultant extrudate to form a gel-like sheet, stretching the gel-like sheet, and removing the above membrane-forming solvent, the slow-cooling speed of the extrudate being 30°C/second or less.

## Description

### FIELD OF THE INVENTION

The present invention relates to a method for producing a microporous polyolefin membrane comprising a polyethylene resin and polypropylene and having well-balanced thickness uniformity, mechanical properties, air permeability, dimensional stability, shutdown properties, meltdown properties and compression resistance.

### BACKGROUND OF THE INVENTION

Microporous polyolefin membranes are widely used in separators for lithium secondary batteries, nickel-hydrogen batteries, nickel-cadmium batteries, polymer batteries, etc.; electrolytic capacitor separators; various filters such as reverse osmosis filtration membranes, ultra filtration membranes, micro filtration membranes, etc.; steam-permeable, water-proof clothing and medical materials, etc. When the microporous polyolefin membranes are used as battery separators, particularly lithium ion battery separators, their performance largely affect the properties, productivity and safety of batteries. Accordingly, the microporous polyolefin membranes are required to have excellent mechanical properties, air permeability, dimensional stability, shutdown properties, meltdown properties, etc.

When microporous polyolefin membranes containing polyethylene are used as battery separators, polyethylene including ultra-high-molecular-weight polyethylene is generally used to obtain excellent mechanical strength. Further, to provide the microporous polyolefin membranes with improved meltdown temperature, thereby improving the high-temperature-storing properties of batteries, polypropylene having excellent heat resistance is preferably used together with polyethylene. However, microporous membranes comprising polyethylene and polypropylene, among others microporous membranes containing ultra-high-molecular-weight polyolefin, tend to be poorer in such properties as thickness uniformity, etc. When microporous membranes with poor thickness uniformity are used as battery separators, short-circuiting is likely to occur, resulting in poor compression resistance and low production yield.

Proposed in such circumstances is a microporous polyolefin membrane comprising polypropylene having MFR of 2.0 or less and a polyethylene composition having a mass-average molecular weight/number-average molecular weight ratio of 8 to 100, with a polypropylene content of 20% by mass or less (JP 2002-194132 A). Specifically, JP 2002-194132 A discloses a microporous polyolefin membrane produced from a composition comprising 30% by mass of powdery ultra-high-molecular-weight polyethylene having a mass-average molecular weight of 2.0 x 10⁶, 65% by mass of powdery high-density polyethylene having a mass-average molecular weight of 3.0 x 10⁵, a polyethylene composition comprising the ultra-high-molecular-weight polyethylene and the high-density polyethylene having Mw/Mn of 20.5, and 5% by mass of propylene homopolymer pellets having a mass-average molecular weight of 6.0 x 10⁵ and MFR of 0.5 by a wet method. This microporous polyolefin membrane has excellent thickness uniformity with good production yield.

As microporous polyolefin membranes having well-balanced thickness uniformity, mechanical properties, air permeability, dimensional stability, shutdown properties and meltdown properties, JP 2004-196870 A proposes a microporous polyolefin membrane comprising polyethylene, and polypropylene having a mass-average molecular weight of 5 x 10⁵ or more and a heat of fusion of 90 J/g or more measured by a differential scanning calorimeter, a polypropylene content being 20% by mass or less, and JP 2004-196871 A proposes a microporous polyolefin membrane comprising polyethylene and polypropylene having a mass-average molecular weight of 5 x 10⁵ or more and a melting point of 163°C or higher measured at a temperature-elevating speed of 3 to 20°C/minute by a differential scanning calorimeter, a polypropylene content being 20% by mass or less.

Separators are recently required to have improved properties such as cyclability, etc., which affect battery lives. Particularly an electrode of a lithium ion battery expands by the insertion of lithium during charging and shrinks by the extraction of lithium during discharging, and their expansion ratio tends to increase during charging by recent increase in the capacity of the battery. Because the separator is compressed during the expansion of the electrode, it is required to have resistance to air permeability variation by compression (compression resistance). The microporous membrane with poor compression resistance likely provides a battery with insufficient capacity (poor cyclability) when used as a separator. The microporous membranes described in the above references, however, do not have sufficient compression resistance.

Microporous membranes for battery separators comprising polyethylene and polypropylene are thus desired to have well-balanced thickness uniformity, mechanical properties, air permeability, dimensional stability, shutdown properties, meltdown properties and compression resistance.

### OBJECTS OF THE INVENTION

Accordingly, an object of the present invention is to provide a method for producing a microporous polyolefin membrane having well-balanced thickness uniformity, mechanical properties, air permeability, dimensional stability, shutdown properties, meltdown properties and compression resistance.

### DISCLOSURE OF THE INVENTION

As a result of intense research in view of the above object, the inventors have found that a microporous polyolefin membrane having well-balanced thickness uniformity, mechanical properties, air permeability, dimensional stability, shutdown properties, meltdown properties and compression resistance can be produced by extruding a melt blend of a polyethylene resin, polypropylene having a mass-average molecular weight of 1 x 10⁵ or more and an ethylene content of 5% by mass or less, and a membrane-forming solvent through a die, and slowly cooling the resultant extrudate to form a gel-like sheet at a speed of 30°C/second or less. The present invention has been completed based on such finding.

Thus, the method of the present invention for producing a microporous polyolefin membrane comprises extruding a melt blend of polyethylene resin, polypropylene having a mass-average molecular weight of 1 x 10⁵ or more and an ethylene content of 5% by mass or less, and a membrane-forming solvent through a die, slowly cooling the resultant extrudate to form a gel-like sheet, stretching the gel-like sheet, and removing the membrane-forming solvent to form the microporous polyolefin membrane, the slow-cooling speed of the extrudate being 30°C/second or less.

The melt blend is preferably extruded from a double-screw extruder. The double-screw extruder preferably has the number of screw revolution Ns of 300 rpm or more, and Q/Ns, a ratio of the amount of the extrudate Q (kg/h) to the number of screw revolution Ns (rpm), of 0.3 kg/h/rpm or less, to improve the dispersion of polypropylene in the microporous membrane, thereby improving thickness uniformity and meltdown properties.

The polyethylene resin preferably comprises ultra-high-molecular-weight polyethylene having a mass-average molecular weight of 5 x 10⁵ or more, and high-density polyethylene having a mass-average molecular weight of 7 x 10⁴ or more and less than 5 x 10⁵. The mass-average molecular weight of the high-density polyethylene is more preferably 3 x 10⁵ or more and less than 5 x 10⁵. The content of the ultra-high-molecular-weight polyethylene is preferably 1% by mass or more, the total of the polyethylene resin and the polypropylene being 100% by mass. The content of the polypropylene is preferably 1 to 30% by mass, the total of the polyethylene resin and the polypropylene being 100% by mass. After the membrane-forming solvent is removed, the membrane is preferably re-stretched in at least one direction to 1.1 to 2.5 fold at a temperature ranging from the crystal dispersion temperature of the polyethylene resin to the melting point of the polyethylene resin +10°C, thereby improving the compression resistance of the microporous membrane.

### DESCRIPTION OF THE PREFERRED EMBODIMENTS

[1] Polyolefin composition

The polyolefin composition comprises as indispensable components a polyethylene resin, and polypropylene having a mass-average molecular weight of 1 x 10⁵ or more and an ethylene content of 5% by mass or less.

(1) Polyethylene resin

The polyethylene resin is (a) ultra-high-molecular-weight polyethylene, (b) other polyethylene than ultra-high-molecular-weight polyethylene, (c) a mixture of ultra-high-molecular-weight polyethylene and other polyethylene than the ultra-high-molecular-weight polyethylene (polyethylene composition), or (d) a composition of any one of the above (a) to (c) and other polyolefin than polyethylene and polypropylene (called "other polyolefin" unless otherwise mentioned). Though not particularly restricted in any cases, the mass-average molecular weight (Mw) of the polyethylene resin is usually 1 x 10⁴ or more, preferably 5 x 10⁴ to 15 x 10⁶, more preferably 5 x 10⁴ to 5 x 10⁶. When the Mw of the polyethylene resin is less than 1 x 10⁴, rupture is likely to occur in the gel-like sheet when stretched, resulting in difficulty in obtaining a microporous polyolefin membrane having excellent properties. When the Mw of the polyethylene resin is 15 x 10⁶ or less, the melt extrusion is easy.

(a) When it is ultra-high-molecular-weight polyethylene only

The ultra-high-molecular-weight polyethylene has Mw of 5 x 10⁵ or more. The ultra-high-molecular-weight polyethylene may be an ethylene homopolymer or an ethylene α-olefin copolymer containing small amounts of other α-olefins. The other α-olefins than ethylene are preferably propylene, butene-1, pentene-1, hexene-1, 4-methylpentene-1, octene, vinyl acetate, methyl methacrylate, and styrene. The Mw of the ultra-high-molecular-weight polyethylene is preferably 1 x 10⁶ to 15 x 10⁶, more preferably 1 x 10⁶ to 5 x 10⁶. The ultra-high-molecular-weight polyethylene may be a mixture of two or more types of ultra-high-molecular-weight polyethylene having different Mws.

(b) When it is other polyethylene than ultra-high-molecular-weight polyethylene

The other polyethylene than the ultra-high-molecular-weight polyethylene preferably has Mw of 7 x 10⁴ or more and less than 5 x 10⁵, being at least one selected from the group consisting of high-density polyethylene, medium-density polyethylene, branched low-density polyethylene and linear low-density polyethylene. The polyethylene having Mw of 7 x 10⁴ or more and less than 5 x 10⁵ may be not only an ethylene homopolymer, but also copolymers containing smalls amount of other α-olefins such as propylene, butene-1, hexene-1, etc. Such copolymers are preferably produced using single-site catalysts. The other polyethylene than the ultra-high-molecular-weight polyethylene more preferably has Mw of 3 x 10⁵ or more and less than 5 x 10⁵. The other polyethylene than the ultra-high-molecular-weight polyethylene may be a mixture of two or more types of high-density polyethylene having different Mw, a mixture of similar types of medium-density polyethylene, or a mixture of similar types of low-density polyethylene.

(c) When it is polyethylene composition

The polyethylene composition is a mixture of ultra-high-molecular-weight polyethylene having Mw of 5 x 10⁵ or more, and other polyethylene than the ultra-high-molecular-weight polyethylene. The ultra-high-molecular-weight polyethylene and the other polyethylene may be the same as described above. The molecular weight distribution (Mw/Mn) of this polyethylene composition can easily be controlled depending on applications. Particularly preferable is a composition of ultra-high-molecular-weight polyethylene and high-density polyethylene. The ultra-high-molecular-weight polyethylene content in the polyethylene composition is preferably 80% by mass or less, the entire polyethylene composition being 100% by mass.

(d) When it is composition containing other polyolefin

The composition containing the other polyolefin is a mixture of any one of the above (a) to (c), and other polyolefin than polyethylene and polypropylene. The other polyolefin may be at least one selected from the group consisting of polybutene-1, polypentene-1, polyhexene-1, polyoctene-1 and an ethylene α-olefin copolymer, each having Mw of 1 x 10⁴ to 4 x10⁶ , and polyethylene wax having Mw of 1 x 10³ to 1 x 10⁴. Polybutene-1, polypentene-1, polyhexene-1 and polyoctene-1 may be a homopolymers or copolymers containing other α-olefins. The content of the other polyolefin may be preferably 20% by mass or less, more preferably 10% by mass or less, the entire polyethylene resin being 100% by mass.

(e) Molecular weight distribution Mw/Mn

Mw/Mn is a measure of a molecular weight distribution, the larger this value, the wider the molecular weight distribution. Though not restrictive, the Mw/Mn of the polyethylene resin is preferably 5 to 300, more preferably 10 to 100, when the polyethylene resin is any one of the above (a) to (c). When the Mw/Mn is less than 5, too much a high-molecular-weight component is contained to conduct melt extrusion. When the Mw/Mn is more than 300, too much a low-molecular-weight component is contained, resulting in a microporous membrane with decreased strength. The Mw/Mn of the polyethylene (homopolymer and ethylene α-olefin copolymer) can be properly controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn, the larger difference in Mw between the ultra-high-molecular-weight polyethylene and the other polyethylene, and vice versa. The Mw/Mn of the polyethylene composition can be properly controlled by the molecular weight and percentage of each component.

(2) Polypropylene

Polypropylene should have Mw of 1 x 10⁵ or more and an ethylene content of 5% by mass or less. When polypropylene has Mw of less than 1 x 10⁻⁵ or has an ethylene content of more than 5% by mass, the microporous membrane has low air permeability. The Mw of polypropylene is preferably 3 x 10⁵ or more. Though not particularly restricted, the upper limit of Mw of polypropylene is preferably 4 x 10⁶. When the Mw of polypropylene is more than 4 x 10⁶, the dispersion of polypropylene in the microporous membrane is likely to deteriorate.

Polypropylene preferably has an ethylene content of 1% by mass or less, and it is more preferably a homopolymer with substantially zero ethylene content. However, as long as the ethylene content is 5% by mass or less, polypropylene may be a propylene-α-olefin copolymer containing a small amount of other α-olefin than ethylene, or a composition of a propylene homopolymer and a propylene·α-olefin copolymer. The α-olefins include butene-1, pentene-1, 4-methylpentene-1, octene, vinyl acetate, methyl methacrylate, styrene, etc. The total content of ethylene and the other α-olefin than ethylene is preferably 5% by mass or less.

(3) Formulation

The polypropylene content is preferably 1 to 30% by mass, the total of the polyethylene resin and polypropylene being 100% by mass. When this content is less than 1% by mass, the meltdown temperature is not improved. On the other hand, when it exceeds 30% by weight, the membrane tends to have poor thickness uniformity. This content is more preferably 2 to 20% by mass.

The content of ultra-high-molecular-weight polyethylene is preferably 1% by mass or more, more preferably 3% by mass or more, the total of the polyethylene resin and polypropylene being 100% by mass.

[2] Production method of microporous polyolefin membrane

The method of the present invention for producing a microporous polyolefin membrane comprises a step (1) of melt-blending the polyethylene resin, polypropylene and the membrane-forming solvent, a step (2) of extruding the resultant polyolefin solution through a die and cooling it to form a gel-like sheet, a stretching step (3), a membrane-forming-solvent-removing step (4), and a drying step (5). After the step (5), if necessary, a re-stretching step (6), a heat treatment step (7), a cross-linking step (8) with ionizing radiations, a hydrophilizing step (9), a surface-coating step (10), etc. may be conducted. Before the step (4), after the step (4) and/or during the step (6), heat setting may be conducted. Before the step (4), hot-rolling and/or hot solvent treatment may be conducted.

(1) Preparation of polyolefin solution

The polyethylene resin, polypropylene and the membrane-forming solvent are melt-blended to prepare a polyolefin solution. The polyolefin solution may contain various additives such as antioxidants, ultraviolet absorbents, antiblocking agents, pigments, dyes, inorganic fillers, etc., if necessary, in ranges not deteriorating the effects of the present invention. Fine silicate powder, for instance, may be added as a pore-forming agent.

The membrane-forming solvent may be liquid or solid. The liquid solvents may be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel molding having a stable liquid solvent content, non-volatile liquid solvents such as liquid paraffin are preferable. The solid solvent preferably has melting point of 80°C or lower. Such a solid solvent is paraffin wax, ceryl alcohol, stearyl alcohol, dicyclohexyl phthalate, etc. The liquid solvent and the solid solvent may be used in combination.

The viscosity of the liquid solvent is preferably 30 to 500 cSt, more preferably 30 to 200 cSt, at a temperature of 25°C. When this viscosity is less than 30 cSt, the polyolefin solution is unevenly extruded through a die lip, resulting in difficulty in blending. The viscosity of more than 500 cSt makes the removal of the liquid solvent difficult.

Though not particularly restricted, the uniform melt-blending of the polyolefin solution is preferably conducted in a double-screw extruder. Melt-blending in a double-screw extruder is suitable for preparing a high-concentration polyolefin solution. The melt-blending temperature is preferably the melting point of polypropylene to the melting point +70°C. Specifically, the melt-blending temperature is preferably 160 to 250°C, more preferably 180 to 230°C. The melting point is measured by differential scanning calorimetry (DSC) according to JIS K7121. The membrane-forming solvent may be added before blending, or charged into the extruder during blending, though the latter is preferable. In the melt-blending, an antioxidant is preferably added to prevent the oxidization of the polyolefin composition.

The content of the polyolefin composition is preferably 10 to 50% by mass, more preferably 20 to 45% by mass, based on 100% by mass of the polyolefin solution. Less than 10% by mass of the polyolefin composition causes large swelling and neck-in at the die exit in the formation of the gel molding, resulting in decrease in the formability and self-supportability of the gel molding. More than 50% by mass of the polyolefin composition deteriorates the formability of the gel molding.

(2) Formation of gel-like sheet

The melt-blended polyolefin solution is extruded through the die of the extruder directly or through a die of another extruder, or once cooled to pellets and extruded through a die of an extruder again. The extruder is preferably a double-screw extruder. The double-screw extruder may be an intermeshing, co-rotating, double-screw extruder, an intermeshing, counter-rotating, double-screw extruder, a non-intermeshing, co-rotating, double-screw extruder, or a non-intermeshing, counter-rotating, double-screw extruder. The intermeshing, co-rotating, double-screw extruder is preferable from the aspect of self-cleaning, and a larger number of rotation with a smaller load than the counter-rotating, double-screw extruder.

The ratio (L/D) of a screw length L to a screw diameter D in the double-screw extruder is preferably 20 to 100, more preferably 35 to 70. When L/D is less than 20, the melt-blending is insufficient. When L/D is more than 100, the residing time of the polyolefin solution is too long. The shape of the screw is not particularly restricted, but may be a known one. The cylinder of the double-screw extruder preferably has an inner diameter of 40 to 80 mm.

In the extrusion of the polyolefin solution through a die, the number of screw revolution Ns of the double-screw extruder is preferably 300 rpm or more, and the ratio Q/Ns of the amount of the extrudate Q (kg/h) to the number of screw revolution Ns (rpm) is preferably 0.3 kg/h/rpm or less. This improves the dispersion of polypropylene in the microporous membrane, thereby providing the improved thickness uniformity and meltdown properties. The number of screw revolution Ns is more preferably 350 rpm or more. Though not particularly restricted, the upper limit of the number of screw revolution Ns is preferably 500 rpm. The Q/Ns is more preferably 0.25 kg/h/rpm or less. Though not particularly restricted, the lower limit of the Q/Ns is preferably 0.01 kg/h/rpm. The Q/Ns can be adjusted by selecting a screw shape (for instance, diameter, depth of grooves at an exit, etc.).

Although a sheet-forming die having a rectangular orifice is usually used, a double-cylindrical, hollow die, an inflation die, etc. may also be used. In the case of the sheet-forming die, a die gap is usually 0.1 to 5 mm, and the die is heated at 140 to 250°C during extruding.

A gel molding of the polyolefin solution extruded through the die is slowly cooled to obtain a gel-like sheet. The slow-cooling speed is 30°C/second or less, to accelerate the crystallization of polypropylene. Because polypropylene is crystallized not in a bulk form but in a laminar form, the microporous membrane is provided with improved thickness uniformity and meltdown properties. The slow-cooling speed is preferably 20°C/second or less, more preferably 15°C/second or less. The lower limit of the slow-cooling speed is preferably 0.8°C/second. When the slow-cooling speed is less than 0.8°C/second, the gel-like sheet has too high a degree of crystallization, not suitable for stretching. The slow cooling is conducted preferably at least to a temperature equal to or lower than a gelation temperature, more preferably to 25°C or lower. Usable as the slow cooling method are a method of bringing an extrudate into direct contact with a cooling medium such as cooling air, cooling water, etc., a method of bringing the extrudate into contact with a roll cooled by a cooling medium, etc., and the cooling-roll-contacting method is preferable. With the above slow cooling, the micro-phase separation of a polyolefin composition phase by the membrane-forming solvent is set.

(3) Stretching

The resultant gel-like sheet is stretched in at least one direction. After heating, the gel-like sheet is stretched to a predetermined magnification by a tenter method, a roll method, an inflation method, a rolling method, or their combination. The biaxial stretching may be simultaneous biaxial stretching, sequential stretching, or multi-stage stretching (for instance, a combination of simultaneous biaxial stretching and sequential stretching), though the simultaneous biaxial stretching is preferable. The stretching provides improved mechanical strength.

The stretching magnification is preferably 2 fold or more, more preferably 3 fold to 30 fold in the case of monoaxial stretching. In the case of biaxial stretching, it is at least 3 fold or more in both directions, with an area magnification of preferably 9 fold or more, more preferably 25 fold or more. The area magnification of 9 fold or more provides improved pin puncture strength. When the area magnification is more than 400 fold, restrictions occur on stretching apparatuses, stretching operations, etc.

The stretching temperature is preferably the melting point +10°C or lower, more preferably in a range of the crystal dispersion temperature or higher and lower than the crystal melting point, regardless of whether the polyethylene resin is ultra-high-molecular-weight polyethylene or the other polyethylene than that (not a composition), and regardless of whether it is a homopolymer or a copolymer. When the stretching temperature is higher than the melting point +10°C, polyethylene is melted, failing to achieve the orientation of molecular chains by stretching. When the stretching temperature is lower than the crystal dispersion temperature, polyethylene is so insufficiently softened that rupture is likely to occur in stretching, failing to achieve stretching at high magnification. When sequential or multi-stage stretching is conducted, first stretching may be conducted at a temperature lower than the crystal dispersion temperature. The crystal dispersion temperature is determined by measuring the temperature properties of dynamic viscoelasticity according to ASTM D 4065. The ultra-high-molecular-weight polyethylene and the other polyethylene than that have crystal dispersion temperatures of about 90 to 100°C.

In the case of the polyethylene composition, the stretching temperature is preferably in a range from the crystal dispersion temperature of the polyethylene composition to the crystal melting point +10°C. The stretching temperature is usually 100 to 140°C, preferably 110 to 120°C.

Depending on the desired properties, stretching may be conducted with a temperature distribution in a thickness direction, or stretching may be sequential or multi-stage stretching comprising first stretching at a relatively low temperature and then second stretching at a high temperature. The stretching with a temperature distribution in a thickness direction generally provides the microporous polyolefin membrane with excellent mechanical strength. This method is described specifically in Japanese Patent 3347854.

The above stretching causes cleavage between polyethylene crystal lamellas, making the polyethylene resin phase phases finer and forming a large number of fibrils. The fibrils form a three-dimensional network structure (an irregularly, three-dimensionally combined network structure).

(4) Removal of membrane-forming solvent

The membrane-forming solvent is removed (washed away) using a washing solvent. Because the polyolefin composition phase is separated from the membrane-forming solvent phase, the microporous membrane is obtained by removing the membrane-forming solvent. The removal (washing away) of the liquid solvent may be conducted by using known washing solvents. The washing solvents may be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorohydrocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉OC₂F₅, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a microporous polyolefin membrane having high porosity and air permeability.

The washing of the stretched membrane can be conducted by a washing-solvent-immersing method, a washing-solvent-showering method, or a combination thereof. The washing solvent used is preferably 300 to 30,000 parts by mass per 100 parts by mass of the stretched membrane. Washing with the washing solvent is preferably conducted until the amount of the remaining membrane-forming solvent becomes less than 1% by mass of that added.

(5) Drying of membrane

The microporous polyolefin membrane obtained by stretching and the removal of the membrane-forming solvent is then dried by a heat-drying method, a wind-drying method, etc. The drying temperature is preferably equal to or lower than the crystal dispersion temperature of the polyethylene resin, particularly 5°C or more lower than the crystal dispersion temperature. Drying is conducted until the percentage of the remaining washing solvent becomes preferably 5% by mass or less, more preferably 3% by mass or less, based on 100% by mass of the dried microporous membrane. Insufficient drying undesirably reduces the porosity of the microporous membrane in a subsequent heat treatment, thereby resulting in poor air permeability.

(6) Re-stretching

The dried membrane is preferably stretched again in at least one direction. The re-stretching may be conducted by the same tenter method as described above, etc. while heating the membrane. The re-stretching may be monoaxial or biaxial stretching. The biaxial stretching may be simultaneous biaxial stretching or sequential stretching, though the simultaneous biaxial stretching is preferable.

The re-stretching temperature is preferably equal to or lower than the melting point of the polyethylene resin in the microporous membrane +10°C, more preferably equal to or lower than the melting point. The lower limit of the re-stretching temperature is preferably the crystal dispersion temperature of the polyethylene resin. When the re-stretching temperature exceeds the melting point +10°C, the membrane has poor compression resistance, and large unevenness in properties (particularly air permeability) in a width direction when stretched in a transverse direction (TD). On the other hand, when the re-stretching temperature is lower than the crystal dispersion temperature, the polyolefin is insufficiently softened, resulting in being highly likely broken in stretching and thus failing to achieve uniform stretching. Specifically, the stretching temperature is usually in a range of 90 to 140°C, preferably in a range of 95 to 135°C.

The magnification of re-stretching in one direction is preferably 1.1 to 2.5 fold to provide the microporous membrane with improved compression resistance. In the case of monoaxial stretching, for instance, it is 1.1 to 2.5 fold in a longitudinal direction (MD) or in a transverse direction (TD). In the case of biaxial stretching, it is 1.1 to 2.5 fold in MD and TD each. In the case of biaxial stretching, the stretching magnification may be the same or different in MD and TD as long as it is 1.1 to 2.5 fold in MD and TD each, though the same stretching magnification is preferable. When this magnification is less than 1.1 fold, the compression resistance is not sufficiently improved. On the other hand, when this magnification is more than 2.5 fold, the membrane is likely to rupture and have decreased heat shrinkage resistance heat shrinkage resistance. The re-stretching magnification is more preferably 1.1 fold to 2.0 fold.

(7) Heat treatment

The dried microporous membrane is preferably heat-treated. The heat treatment stabilizes crystals and makes lamellas uniform. The heat treatment may be heat setting and/or annealing, properly selectable depending on the required properties. The heat treatment is conducted at a temperature equal to or lower than the melting point of the polyethylene resin +10°C, preferably at a temperature ranging from 60°C to the melting point.

The heat setting is more preferably conducted by a tenter method, a roll method or a rolling method. The annealing may be conducted using a belt conveyor or an air-floating furnace, in addition to the above method. In the case of annealing, the shrinkage ratio is preferably 50% or less, more preferably 30% or less, in at least one direction. The annealing shrinkage of the re-stretched microporous membrane is restricted such that the length of the membrane in a re-stretching direction remains preferably 91 % or more, more preferably 95% or more, of that before re-stretching. When this shrinkage is less than 91 %, the re-stretched sheet has poor balance in properties, particularly air permeability, in a width direction. Such annealing provides the microporous membrane with good air permeability and high strength. If necessary, heat setting may be conducted before or after removing the membrane-forming solvent from the stretched gel-like sheet, and/or during re-stretching.

(8) Cross-linking of membrane

Regardless of whether or not the heat treatment is conducted, the microporous polyolefin membrane is preferably cross-linked by ionizing radiation of α-rays, β-rays, γ-rays, electron beams, etc. The cross-linking by ionizing radiation is preferably conducted with electron beams of 0.1 to 100 Mrad and at accelerating voltage of 100 to 300 kV. The cross-linking treatment elevates the meltdown temperature of the microporous polyolefin membrane.

(9) Hydrophilizing

The microporous polyolefin membrane may be hydrophilized. The hydrophilizing treatment may be a monomer-grafting treatment, a surfactant treatment, a corona-discharging treatment, etc. The monomer-grafting treatment is preferably conducted after cross-linking.

The surfactant treatment may use any of nonionic surfactants, cationic surfactants, anionic surfactants and amphoteric surfactants, though the nonionic surfactants are preferable. The microporous membrane is dipped in a solution of the surfactant in water or a lower alcohol such as methanol, ethanol, isopropyl alcohol, etc., or coated with the solution by a doctor blade method.

(10) Coating

The microporous polyolefin membrane may be coated with polypropylene; a porous body of fluororesins such as polyvinylidene fluoride, polytetrafluoroethylene, etc.; a porous body of polyimide, polyphenylene sulfide, etc., to have high meltdown properties when used as battery separators. The coating polypropylene preferably has Mw in a range from 5,000 to 500,000 and solubility of 0.5 g or more per 100 g of toluene at 25°C. This polypropylene more preferably has a racemic diad fraction of 0.12 to 0.88. The racemic diad means a structure unit in which a pair of bonded monomer units are enantiomeric to each other.

(11) Hot-rolling

At least one surface of the stretched gel-like sheet before washing may be brought into contact with a hot roll (hot-rolling). The hot-rolling may be conducted by using, for instance, the method described in Japanese Patent Application 2005-271046, in which the stretched gel-like sheet is brought into contact with a hot roll controlled at a temperature of the crystal dispersion temperature of the polyethylene resin +10°C or higher and lower than the melting point. The contact time of the stretched gel-like sheet with the hot roll is preferably 0.5 seconds to 1 minute. The stretched gel-like sheet may be brought into contact with a roll surface holding hot oil. The hot roll may be a flat, smooth roll, or a rough-surface roll having a suction function. The hot-rolling gives a coarse surface layer having a large average pore diameter to the microporous membrane, while keeping a dense structure in the interior of the microporous membrane, thereby producing a membrane exhibiting little variation in air permeability when compressed, and having a high speed of absorbing an electrolytic solution.

(12) Hot solvent treatment

The stretched gel-like sheet before washing may be subjected to a hot solvent treatment. The hot solvent treatment may use, for instance, the method disclosed in WO 2000/20493, in which the stretched gel-like sheet is brought into contact with the above liquid membrane-forming solvent, for instance, liquid paraffin, heated at a temperature ranging from the crystal dispersion temperature of the polyethylene resin to the melting point of the polyethylene resin +10°C. The contact time is preferably 0.1 second to 10 minutes, more preferably 1 second to 1 minute. The hot solvent treatment provides the microporous membrane with large pore diameters, and excellent air permeability and strength.

[3] Microporous polyolefin membrane

The microporous polyolefin membrane obtained by the above method has the following properties.

(1) Air permeability of 20 to 400 seconds/100 cm³ (converted to value at 20-µm thickness)

With air permeability of 20 to 400 seconds/100 cm³, the microporous polyolefin membrane used as battery separators provides batteries with large capacity and good cyclability. The air permeability of less than 20 seconds/100 cm³ fails to perform enough shutdown when the temperature elevates in the batteries.

(2) Porosity of 25 to 80%

With the porosity of less than 25%, the microporous polyolefin membrane does not have good air permeability. When the porosity exceeds 80%, the microporous polyolefin membrane used as battery separators does not have enough strength, resulting in a high likelihood of short-circuiting between electrodes.

(3) Pin puncture strength of 1,500 mN/20 µm or more

With the pin puncture strength of less than 1,500 mN/20 µm, batteries comprising the microporous membrane as separators likely suffer short-circuiting between electrodes. The pin puncture strength is preferably 3,000 mN/20 µm or more.

(4) Tensile rupture strength of 20,000 kPa or more

With the tensile rupture strength of 20,000 kPa or more in both longitudinal direction (MD) and transverse direction (TD), there is no likelihood of rupture. The tensile rupture strength is preferably 80,000 kPa or more in both longitudinal direction (MD) and transverse direction (TD).

(5) Tensile rupture elongation of 100% or more

With the tensile rupture elongation of 100% or more in both longitudinal direction (MD) and transverse direction (TD), there is no likelihood of rupture.

(6) Heat shrinkage ratio of 10% or less

When the heat shrinkage ratio exceeds 10% in both longitudinal direction (MD) and transverse direction (TD) after exposed to 105°C for 8 hours, battery separators formed by the microporous polyolefin membrane shrink by heat generated by the batteries, resulting in high likelihood of short-circuiting in their end portions. The heat shrinkage ratio is preferably 8% or less in both MD and TD.

(7) Thickness variation ratio of 1% or less

When the microporous polyolefin membrane having a thickness variation ratio of more than 1 % is used as battery separators, there is a high likelihood of short-circuiting. The thickness variation ratio is a value (percentage) obtained by measuring the thickness of the microporous membrane at a 5-mm interval over a length of 60 cm in TD by a contact thickness meter, calculating a standard deviation from the resultant data, and dividing the standard deviation by an average thickness.

(8) Thickness variation ratio of 15% or more after heat compression

When the thickness variation ratio is 15% or more after heat compression at 90°C under pressure of 2.2 MPa (22 kgf/cm²) for 5 minutes, the microporous polyolefin membrane used as battery separators can well absorb the expansion of electrodes. This thickness variation ratio is preferably 20% or more.

(9) Air permeability of 700 seconds/100 cm³ or less after heat compression (converted to value at 20-µm thickness)

When the air permeability after heat compression at 90°C under pressure of 2.2 MPa (22 kgf/cm²) for 5 minutes (post-compression air permeability) is 700 seconds/100 cm³ or less, batteries having separators formed by the microporous polyolefin membrane have large capacity and good cyclability.

(10) Haze of 80% or more

When the haze (diffusion transmittance (%) = diffusion-transmitted light / all transmitted light x 100) measured by using ultraviolet rays having a wavelength of 400 nm is 80% or more, polypropylene is well dispersed in the microporous polyolefin membrane, resulting in good thickness uniformity and meltdown properties.

[4] Battery separator

Battery separators formed by the above microporous polyolefin membrane have thickness of preferably 5 to 50 µm, more preferably 10 to 35 µm, though it may be selectable depending on the types of batteries.

The present invention will be explained in more detail with reference to Examples below without intention of restricting the scope of the present invention.

Example 1

Dry-blended were 100 parts by mass of a polyolefin (PO) composition comprising 10% by mass of ultra-high-molecular-weight polyethylene (UHMWPE, Mw/Mn: 11) having a mass-average molecular weight (Mw) of 2.0 x 10⁶, 80% by mass of high-density polyethylene (HDPE, Mw/Mn: 8.7) having Mw of 3.3 x 10⁵, and 10% by mass of a polypropylene homopolymer (PP) having Mw of 5.3 x 10⁵, and 0.375 parts by mass of tetrakis[methylene-3-(3,5-ditertiary-butyl-4-hydroxyphenyl)-propionate] methane as an antioxidant. Measurement revealed that the polyethylene (PE) composition comprising UHMWPE and HDPE had Mw of 5.1 x 10⁵, Mw/Mn of 12, a melting point of 135°C, and a crystal dispersion temperature of 100°C.

The Mws and Mw/Mn ratios of UHMWPE, HDPE, the PE composition and polypropylene were measured by a gel permeation chromatography (GPC) method under the following conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer available from Waters Corp., and
Calibration curve: Produced from a calibration curve of a single-dispersion,
standard polystyrene sample using a predetermined conversion constant.

25 parts by mass of the resultant mixture was charged into a strong-blending double-screw extruder having an inner diameter of 54 mm and L/D of 52.5, and 75 parts by mass of liquid paraffin was supplied to the double-screw extruder via its side feeder. Melt-blending was conducted at 210°C and 420 rpm to prepare a PO solution. The PO solution was sent to a T-die attached to a tip end of the double-screw extruder, and extruded a rate Q of 88.2 kg/h (Q/Ns: 0.21) while keeping the number of screw revolution Ns at 420 rpm. The extrudate was drawn by cooling rolls controlled at 20°C and slowly cooled at a speed of 10°C/second to form a 1-mm-thick gel-like sheet. Using a tenter-stretching machine, the gel-like sheet was simultaneously and biaxially stretched at 114°C, such that the stretching magnification was 5 fold in both longitudinal direction (MD) and transverse direction (TD). Fixed to an aluminum frame of 20 cm x 20 cm, the stretched membrane was immersed in methylene chloride controlled at 25°C, and washed with the vibration of 100 rpm for 3 minutes. The resultant membrane was dried by air at room temperature, and fixed to a tenter to conduct heat setting at 128°C for 10 minutes, thereby providing a microporous polyolefin membrane.

Example 2

A microporous polyolefin membrane was produced in the same manner as in Example 1, except that a PE composition (Mw: 4.2 x 10⁵, Mw/Mn: 11) comprising 5% by mass of UHMWPE and 85% by mass of HDPE was used as the polyethylene resin, that the concentration of the PO solution was 35% by mass, that the PO solution was extruded at Q/Ns of 0.15, and that the heat setting temperature was 129°C.

Example 3

A microporous polyolefin membrane was produced in the same manner as in Example 1, except that a PE composition (Mw: 4.2 x 10⁵, Mw/Mn: 11) comprising 5% by mass of UHMWPE and 85% by mass of HDPE was used as the polyethylene resin, that the concentration of the PO solution was 35% by mass, that the PO solution was extruded at Q/Ns of 0.24, that the washed, stretched membrane was stretched again to 1.3 fold at 130°C in TD, and that the heat setting temperature was 130°C.

Example 4

A microporous polyolefin membrane was produced in the same manner as in Example 1, except that a PO composition comprising a PE composition (Mw: 3.6 x 10⁵, Mw/Mn: 10) comprising 2% by mass of UHMWPE and 93% by mass of HDPE, and 5% by mass of PP was used, that the concentration of the PO solution was 35% by mass, that the PO solution was extruded through a die at Q/Ns of 0.24, that the slow-cooling speed of the extruded melt blend was 25°C/second (cooling temperature: 18°C), that the stretching temperature was 117°C, that the washed, stretched membrane was stretched again to 1.4 fold at 130.5°C in TD, and that the heat setting temperature was 130.5°C.

### Example 5

A microporous polyolefin membrane was produced in the same manner as in Example 1, except that a PO composition comprising a PE composition (Mw: 4.2 x 10⁵, Mw/Mn: 11) comprising 5% by mass of UHMWPE and 90% by mass of HDPE, and 5% by mass of PP was used, that the concentration of the PO solution was 40% by mass, that the PO solution was extruded through a die at Q/Ns of 0.24, that the slow-cooling speed of the extruded melt blend was 25°C/second (cooling temperature: 18°C), that the stretching temperature was 117°C, that the washed, stretched membrane was stretched again to 1.4 fold at 129.5°C in TD, and that the heat setting temperature was 129.5°C.

Example 6

A microporous polyolefin membrane was produced in the same manner as in Example 1, except that the concentration of the PO solution was 30% by mass, that the washed, stretched membrane was stretched again to 1.2 fold at 130°C in MD, and that the heat setting temperature was 130°C.

Example 7

A microporous polyolefin membrane was produced in the same manner as in Example 1, except that a PO composition comprising a PE composition (Mw: 6.2 x 10⁵, Mw/Mn: 17) comprising 10% by mass of UHMWPE and 80% by mass of HDPE (Mw: 4.5 x 10⁵, Mw/Mn: 13.5), and 10% by mass of PP was used, that the concentration of the PO solution was 35% by mass, that the stretching temperature was 115°C, that the washed, stretched membrane was stretched again to 1.3 fold at 125°C in TD, and that the heat setting temperature was 125°C.

Example 8

A microporous polyolefin membrane was produced in the same manner as in Example 1, except that a PO composition comprising a PE composition (Mw: 6.2 x 10⁵, Mw/Mn: 17) comprising 10% by mass of UHMWPE and 80% by mass of HDPE (Mw: 4.5 x 10⁵, Mw/Mn: 13.5), and 10% by mass of PP was used, that the concentration of the PO solution was 30% by mass, that the stretching temperature was 115°C, and that the heat setting temperature was 123°C.

Example 9

A microporous polyolefin membrane was produced in the same manner as in Example 1, except that a PO composition comprising a PE composition (Mw: 6.3 x 10⁵, Mw/Mn: 17) comprising 10% by mass of UHMWPE and 75% by mass of HDPE, and 15% by mass of PP was used, that the concentration of the PO solution was 35% by mass, that the PO solution was extruded at Q/Ns of 0.15, that the stretching temperature was 116°C, and that the washed, stretched membrane was simultaneously biaxially stretched to 1.2 x 1.2 fold at 128°C.

Comparative Example 1

A microporous polyolefin membrane was produced in the same manner as in Example 1, except that a PE composition (Mw: 7.6 x 10⁵, Mw/Mn: 19, melting point: 135°C, crystal dispersion temperature: 100°C) comprising 20% by mass of UHMWPE and 80% by mass of HDPE (Mw: 4.5 x 10⁵, Mw/Mn: 13.5) without PP was used as the PO composition, that the concentration of the PO solution was 30% by mass, that the PO solution was extruded through a die at Q/Ns of 0.35 (the number of screw revolution Ns: 280 rpm, and the amount of the extrudate Q: 98 kg/h), that the extruded melt blend was cooled at 80°C/second, and that no heat setting was conducted.

Comparative Example 2

A microporous polyolefin membrane was produced in the same manner as in Example 1, except that a PO composition comprising a PE composition (Mw: 7.9 x 10⁵, Mw/Mn: 19) comprising 20% by mass of UHMWPE and 70% by mass of HDPE (Mw: 4.5 x 10⁵, Mw/Mn: 13.5), and 10% by mass of PP was used, that the concentration of the PO solution was 30% by mass, that the PO solution was extruded at Q/Ns of 0.35 (the number of screw revolution Ns: 250 rpm, and the amount of the extrudate Q: 87.5 kg/h), that the melt blend extruded through a die was cooled at 80°C/second, and that the heat setting temperature was 120°C.

The properties of the microporous polyolefin membranes obtained in Examples 1 to 9 and Comparative Examples 1, 2 were measured by the following methods. The results are shown in Table 1.

(1) Average thickness (µm)

The thickness of the microporous membrane was measured at an arbitrary longitudinal position and at a 5-mm interval over a length of 60 cm in a transverse direction (TD) by a contact thickness meter, and the measured thickness was averaged.

(2) Air permeability (sec/100 cm³/20 µm)

The air permeability P₁ of the microporous membrane having a thickness T₁ was measured according to JIS P8117, and converted to air permeability P₂ at a thickness of 20 µm by the formula of P₂ = (P₁ x 20)/T₁.

(3) Porosity (%)

It was measured by a mass method.

(4) Pin puncture strength (mN/20 µm)

The maximum load was measured, when a microporous membrane having a thickness T₁ was pricked with a needle of 1 mm in diameter with a spherical end surface (radius R of curvature: 0.5 mm) at a speed of 2 mm/second. The measured maximum load L₁ was converted to the maximum load L₂ at a thickness of 20 µm by the formula of L₂ = (L₁ x 20) /T₁, which was regarded as pin puncture strength.

(5) Tensile rupture strength and tensile rupture elongation

They were measured using a 10-mm-wide rectangular test piece according to ASTM D882.

(6) Heat shrinkage ratio (%)

The shrinkage ratio of the microporous membrane when exposed to 105°C for 8 hours was measured three times in both longitudinal direction (MD) and transverse direction (TD) and averaged.

(7) Shutdown temperature

Using a thermomechanical analyzer (TMA/SS6000 available from Seiko Instruments, Inc.), a microporous membrane sample of 10 mm (TD) x 3 mm (MD) was heated at a speed of 5°C/minute from room temperature while being longitudinally drawn under a load of 2 g. A temperature at an inflection point observed near the melting point was regarded as a shutdown temperature.

(8) Meltdown temperature (°C)

Using the above thermomechanical analyzer, a microporous membrane sample of 10 mm (TD) x 3 mm (MD) was heated at a speed of 5°C/minute from room temperature while being longitudinally drawn under a load of 2 g, to measure a temperature at which the sample was ruptured by melting.

(9) Thickness variation ratio

It was a value (percentage) obtained by measuring the thickness of the microporous membrane at an arbitrary longitudinal position at a 5-mm interval over a length of 60 cm in a transverse direction (TD) by a contact thickness meter, calculating a standard deviation from the resultant data, and dividing the standard deviation by an average thickness.

(10) Air permeability and thickness variation ratio after heat compression

A microporous membrane sample was sandwiched by a pair of press plates having high flatness and smoothness, and heat-compressed at 90°C under pressure of 2.2 MPa (22 kgf/cm²) for 5 minutes by a press machine. The air permeability (post-compression air permeability) and the average thickness were measured by the above methods. With the average thickness before the heat compression being 100%, the thickness variation ratio was calculated.

(11) Dispersion of PP

It was evaluated by measuring haze (diffusion transmittance (%) = diffusion-transmitted light / all transmitted light x 100) using ultraviolet rays having a wavelength of 400 nm.

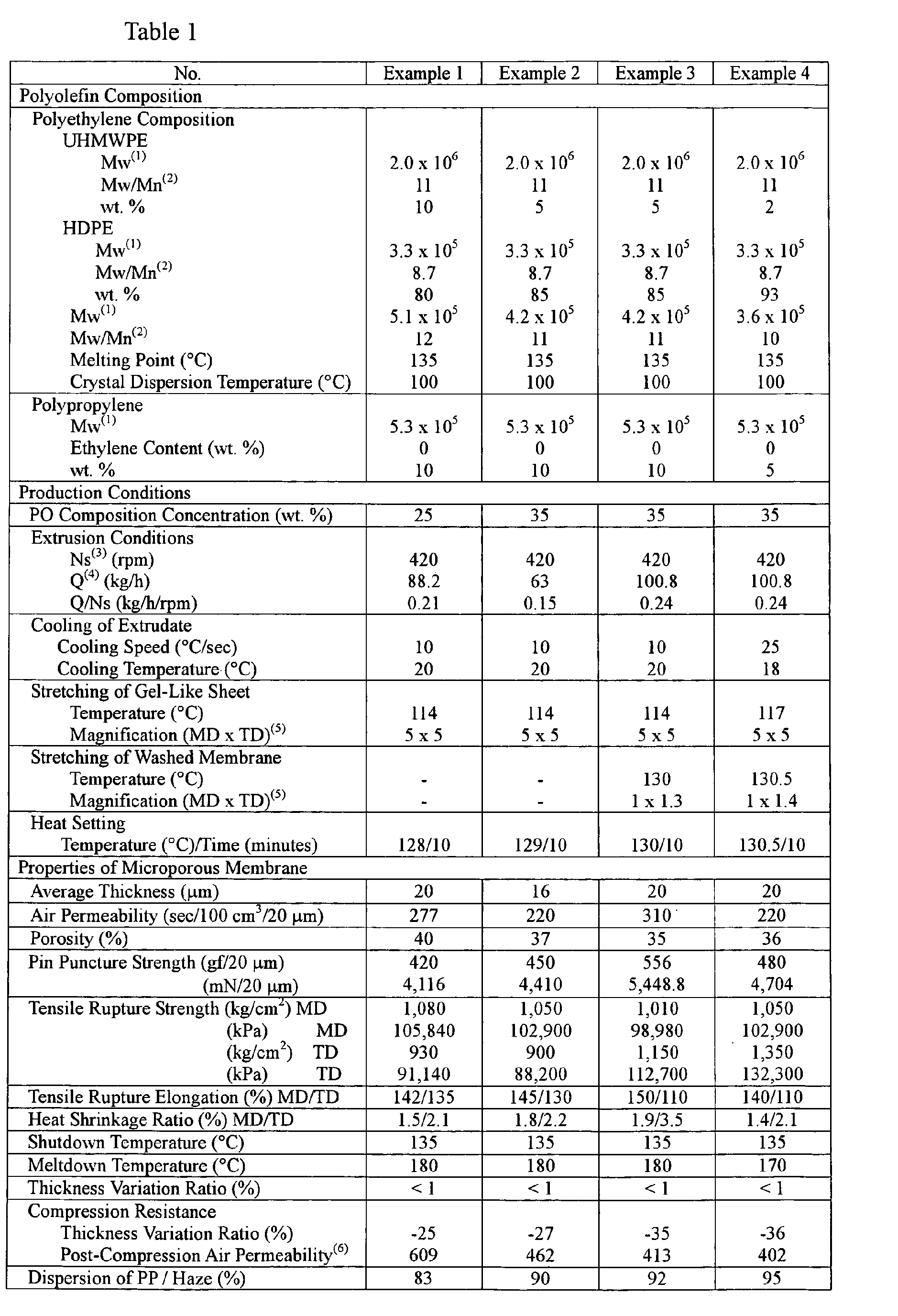

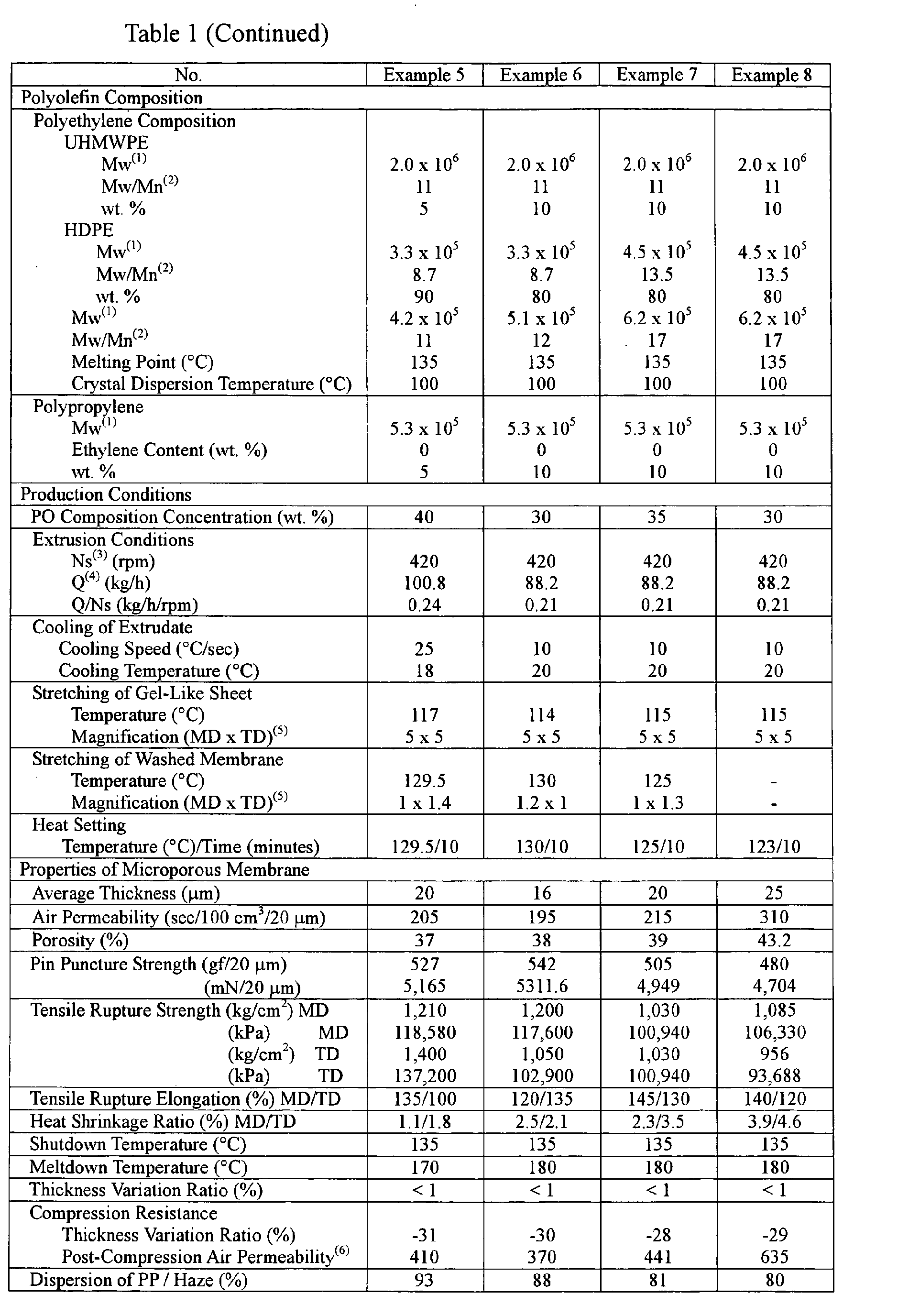

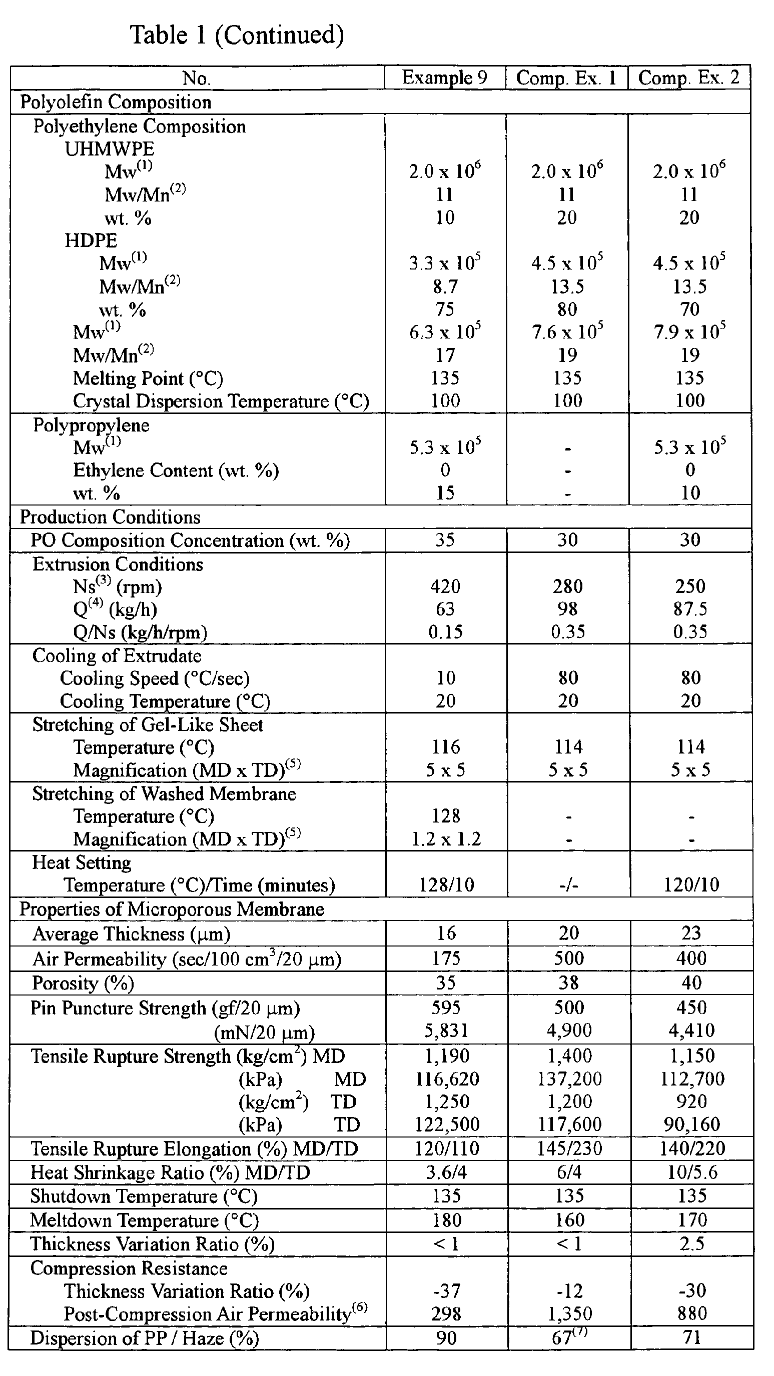

Note: (1) Mw represents a mass-average molecular weight.

(2) Mw/Mn represents a molecular weight distribution.

(3) Ns represents the number of screw revolution.

(4) Q represents the amount of the extrudate.

(5) MD represents a longitudinal direction, and TD represents a transverse direction.

(6) The unit of the post-compression air permeability is "sec/100 cm³/20 µm."

(7) Not containing PP.

It is clear from Table 1 that Examples 1 to 9 produced microporous membranes having well-balanced thickness uniformity, mechanical properties, air permeability, dimensional stability, shutdown properties, meltdown properties and compression resistance. In Comparative Example 1, in which PP was not added, on the contrary, air permeability, meltdown properties and compression resistance were poorer than those in Examples 1 to 9. In Comparative Example 2, the cooling speed of the melt blend extruded through a die was more than 30°C/second, and the number of screw revolution Ns when the PO solution was extruded from the double-screw extruder was less than 300 rpm, the ratio Q/Ns being more than 0.3 kg/h/rpm. Accordingly, Comparative Example 2 was poorer than Examples 1 to 9 in the dispersion of PP, resulting in much poorer thickness uniformity.

### EFFECT OF THE INVENTION

The microporous polyolefin membrane of the present invention has an excellent balance of thickness uniformity, mechanical properties, air permeability, dimensional stability, shutdown properties, meltdown properties and compression resistance. The use of such microporous polyolefin membrane as separators provides batteries excellent not only in capacity properties, cyclability, discharge properties, etc., but also in safety and productivity such as heat resistance, compression resistance, electrolytic solution absorption, etc. The microporous polyolefin membrane of the present invention is suitable for various filters.

## Claims

1. A method for producing a microporous polyolefin membrane comprising the steps of extruding a melt blend of a polyethylene resin, polypropylene having a mass-average molecular weight of 1 x 10⁵ or more, and an ethylene content of 5% by mass or less, and a membrane-forming solvent through a die, slowly cooling the resultant extrudate to form a gel-like sheet, stretching the gel-like sheet, and removing said membrane-forming solvent, the slow-cooling speed of said extrudate being 30°C/second or less.

2. The method for producing a microporous polyolefin membrane according to claim 1, wherein said melt blend is extruded from a double-screw extruder, wherein the number of screw revolution Ns in said double-screw extruder is 300 rpm or more, and wherein a ratio Q/Ns of the amount of the extrudate Q (kg/h) to the number of screw revolution Ns (rpm) is 0.3 kg/h/rpm or less.

3. The method for producing a microporous polyolefin membrane according to claim 1 or 2, wherein said polyethylene resin comprises ultra-high-molecular-weight polyethylene having a mass-average molecular weight of 5 x 10⁵ or more, and high-density polyethylene having a mass-average molecular weight of 7 x 10⁴ or more and less than 5 x 10⁵, wherein the content of said ultra-high-molecular-weight polyethylene is 1% by mass or more per the total amount (100% by mass) of said polyethylene resin and said polypropylene, and wherein the content of said polypropylene is 1 to 30% by mass.

4. The method for producing a microporous polyolefin membrane according to any one of claims 1 to 3, wherein after said membrane-forming solvent is removed, it is stretched again to 1.1 to 2.5 fold in at least one direction at a temperature ranging from the crystal dispersion temperature of said polyethylene resin to the melting point of said polyethylene resin +10°C.
